# EUROPÄISCHE PATENTSCHRIFT

(11) **EP 1 376 086 B1**
(45) Veröffentlichungstag und Bekanntmachung des Hinweises auf die Patenterteilung: **29.12.2010**
(21) Anmeldenummer: 03013818.4
(22) Anmeldetag: 18.06.2003
(51) Int. Cl.: G01L 3/14, G01L 25/00

(54) **Drehmomentsensor**
Torque sensor
Capteur de couple

(30) Priorität: 25.06.2002 DE 20209850 U
(43) Veröffentlichungstag der Anmeldung: 02.01.2004
(73) Patentinhaber: Eduard Wille GmbH & Co KG, 42349 Wuppertal (DE)
(72) Erfinder: Herbold, Siegfried, 42349 Wuppertal (DE); Schwafertz, Rainer, 42899 Remscheid (DE); Wilhelm, Joachim, 42349 Wuppertal (DE)
(74) Vertreter: Weisse, Renate

(56) Entgegenhaltungen:
- DE-A1- 3 514 545
- DE-A1- 19 502 616

## Beschreibung

Die Erfindung betrifft einen Drehmomentsensor enthaltend einen inneren Körper mit einer Achse, in bezug auf welche ein Drehmoment zu messen ist, und einen äußeren Ringkörper, der den inneren Körper konzentrisch umgibt und über radiale Stege mit dem inneren Körper verbunden sind, wobei eine erste Art von Stegen mit in Umfangsrichtung relativ großer Breite aber relativ geringen axialen Abmessungen und eine zweite Art von in Umfangsrichtung relativ schmalen Stegen aber relativ großen axialen Abmessungen vorgesehen sind, und Meßelemente zur Torsionsmessung auf den Stegen der ersten Art angeordnet sind.

Einen solchen Drehmomentsensor zeigt die DE 195 02 616 A1. Dieser bekannte Drehmomentsensor dient zur Messung des Drehmomentes, das von umlaufenden Teilen übertragen wird. Der Ringkörper wird durch axiale Schrauben mit einem umlaufenden Teil verbunden. Der innere Körper ist ein Ring, der ebenfalls mittels axialer Schrauben mit dem anderen umlaufenden Teil verbunden wird. Das Antriebsdrehmoment wird über die Stege geleitet. Auf den Stegen der ersten Art, die in Umfangsrichtung breit aber in axialer Richtung relativ dünn sind, sind Meßelemente in Form von Dehnungsmeßstreifen angeordnet, welche auf Torsion ansprechen. Die Stege der zweiten Art nehmen axiale Kräfte auf. Der Drehmomentsensor nach der DE 195 02 616 A1 weist zwei diametral gegenüberliegende breite und flache Stege der ersten Art mit den Meßgebern auf. Weiterhin sind symmetrisch zu den Stegen der ersten Art Stege der zweiten Art in unterschiedlichen Abständen voneinander angeordnet. Die Meßwerte werden über einen Sender übertragen.

Es besteht das Bedürfnis, Schraubwerkzeuge zu kalibrieren. Dieses Kalibrieren kann darin bestehen, das Drehmoment zu ermitteln und ggf. einzustellen, bei welchem ein Drehmomentschlüssel anspricht. Es können aber auch dynamisch arbeitende

Schraubwerkzeuge wie Schlag- oder Impulsschrauber kalibriert werden, wo festgestellt wird, welches Drehmoment impulsartig auf eine Schraubverbindung ausgeübt wird.

DE 35 14 545 offenbart eine Vorrichtung zum Eichen einer Schraubmashine.

Der Erfindung liegt daher die Aufgabe zugrunde, einen Drehmomentsensor zum Kalibrieren von Schraubwerkzeugen zu schaffen.

Erfindungsgemäß wird dazu ein Drehmomentsensor der eingangs genannten Art in der Weise ausgestaltet, daß
(a) der Ringkörper stationär gehalten ist,
(b) der innere Körper eine zentrale, zu der Achse koaxiale Aufnahme zum Eingriff eines zu prüfendes Schraubwerkzeuges aufweist und

Der Drehmomentsensor mißt somit nicht das Drehmoment, das von einer umlaufenden Welle o. dgl. übertragen wird, und ist demgemäß nicht fest in die umlaufenden, das Drehmoment übertragende Anordnung eingebaut. Vielmehr ist der Drehmomentsensor mit seinem Ringkörper stationär angeordnet. Ein zu kalibrierendes Schraubwerkzeug wird mit dem inneren Körper gekoppelt. Dann wird das von dem Schraubwerkzeug auf den inneren Körper ausgeübte Drehmoment gemessen.

Beim Kalibrieren eines Drehmomentschlüssels wird das aufgebrachte Drehmoment so lange erhöht, bis der Drehmomentschlüssel anspricht. Das ist ein dynamischer Vorgang. Das Drehmoment beim Ansprechen des Drehmomentschlüssels muß genau und unbeeinflußt von Störkräften gemessen werden. Bei der Kalibrierung von dynamisch arbeitenden Schraubwerkzeugen ist das dynamische Verhalten des Drehmomentsensors und die Unterdrückung von Störkräften von besonderer Bedeutung.

Um solche Störkräfte zu unterdrücken, ist in weiterer Ausbildung der Erfindung vorgesehen, daß
(a) der Ringkörper durch ein erstes Kreuz von vier um jeweils 90° gegeneinander um die Achse winkelversetzten Stege der ersten Art mit dem inneren Körper verbunden ist,
(b) der Ringkörper weiterhin durch ein zweites Kreuz von vier um jeweils 90° um die Achse gegeneinander winkelversetzten Stegen der zweiten Art mit dem inneren Körper verbunden ist,
(c) das zweite Kreuz um 45° um die Achse gegen das erste Kreuz winkelversetzt ist
(d) Meßelemente auf allen vier Stegen der ersten Art angeordnet und so zusammengeschaltet sind, daß unter Kompensation von Störmomenten ein Meßwert für ein um die Achse auf den inneren Körper wirkendes Drehmoment erhalten wird.

Bei einer solchen Konstruktion ist der Drehmomentsensor so ausgebildet, daß keine Verfälschung des Meßergebnisses durch eintreten kann, die z.B. durch die Art der Ankopplung oder der Ausübung des Drehmomentes auf das angekoppelte Schraubwerkzeug hervorgerufen werden können. Es hat sich gezeigt, daß auf diese Weise eine einwandfreie Messung des Drehmoments um die Achse möglich ist.

Vorzugsweise ist das Trägheitsmoment des inneren Körpers so klein, daß beim Kalibrieren von dynamisch arbeitenden Schraubwerkzeugen, wie Impulsschraubern, die von dem inneren Körper hervorgerufenen Trägheitskräfte gegenüber den auf die Stege wirkenden Kräften vernachlässigbar sind.

Das kann durch verschiedene Maßnahmen erreicht werden. Eine Maßnahme besteht darin, daß die radialen Abmessungen des innere Körpers klein gegen die radialen Abmessungen des Ringkörpers sind. Eine weitere Maßnahme besteht darin, daß der innere Körper aus einem Material besteht, das ein gegenüber dem Material des Ringkörpers geringes spezifisches Gewicht besitzt. Schließlich können in dem inneren Körper regelmäßig angeordnete Durchbrüche zur Verminderung des Trägheitsmoments vorgesehen sein.

Bei einer bevorzugten Anordnung weist der innere Körper als zentrale Aufnahme zum Eingriff eines zu prüfenden Schraubwerkzeugs eine Nabe mit einem Vierkantdurchbruch auf. Es hat sich dabei gezeigt, daß optimale Meßergebnisse erhalten werden, wenn der Vierkantdurchbruch mit den Seitenflächen des Vierkants zu den Stegen der ersten Art und mit den Kanten zu den Stegen der zweiten Art ausgerichtet ist.

Zwei Ausführungsbeispiele der Erfindung sind nachstehend unter Bezugnahme auf die zugehörigen Zeichnungen näher erläutert.
- Fig.1: ist eine perspektivische Darstellung eines Drehmomentsensors zum Kalibrieren von Schraubwerkzeugen.
- Fig.2: zeigt eine Vorderansicht einer zweiten Ausführung des Drehmomentsensors.
- Fig.3: zeigt einen Schnitt längs der Linie A - A von Fig. 2.
- Fig.4: ist eine perspektivische Darstellung, ähnlich Fig. 1, der zweiten Ausführung des Drehmomentsensors.
- Fig.5: zeigt die Schaltung der Meßelemente.

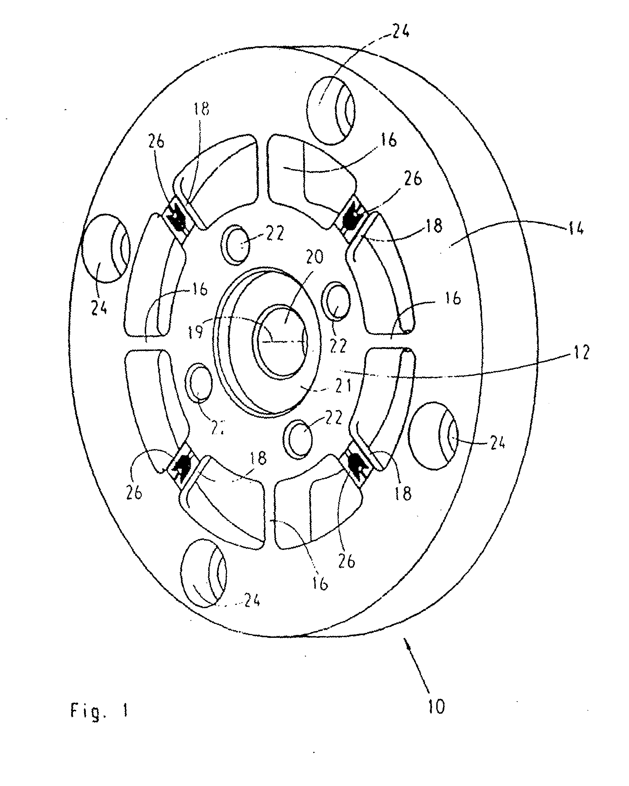

In Fig. 1 ist mit 10 generell der Drehmomentsensor bezeichnet. Der Drehmomentsensor 10 enthält einen inneren Körper 12. Der innere Körper 12 ist konzentrisch von einem äußeren Ringkörper 14 umgeben. Der innere Körper 12 ist über Stege 18 einer ersten Art und Stege 16 einer zweiten Art mit dem äußeren Ringkörper 14 verbunden. Die Stege 18 erster Art sind in Umfangsrichtung relativ zu den Stegen 16 der zweiten Art breit. Die axialen Abmessungen der Stege 18 der ersten Art sind jedoch gering. Die Stege 18 bilden praktisch flache Platten in einer zur Achse des Drehmomentsensors senkrechten Ebene. Die Stege 16 der zweiten Art sind in Umfangsrichtung schmal. Die axialen Abmessungen der Stege 16 sind aber relativ zu den Stegen 18 groß und erstrecken sich über die gesamte Tiefe des äußeren Ringkörpers 14.

Der äußere Ringkörper wird stationär gehalten. Zu diesem Zweck wird er durch (nicht dargestellte) Schraubbolzen, die durch Schraublöcher 24 geführt sind, an einem Träger, z.B. einer Wand, befestigt.

Die Stege 18 nehmen im wesentlichen das um die Achse des Drehmomentsensors wirkende Drehmoment in Umfangsrichtung auf. Auf den Stegen 18 der ersten Art sind dementsprechend Meßelemente 26 zur Torsionsmessung in Form von Dehnungsmeßstreifen angebracht. Die Stege 16 dienen zur Stabilisierung der Anordnung gegen axiale Kräfte, während sie wenig zur Aufnahme des Drehmoments in Umfangsrichtung beitragen.

Es sind vier Stege 18 der ersten Art vorgesehen. Diese Stege 18 sind jeweils um 90° um eine zentrale Achse 19 gegeneinander winkelversetzt und bilden ein erstes Kreuz von Stegen. Es sind weiterhin vier Stege 16 der zweiten Art vorgesehen, die jeweils um 90° um die zentrale Achse 19 gegeneinander winkelversetzt sind und ein zweites Kreuz von Stegen bilden. Das zweite Kreuz ist gegenüber dem ersten Kreuz wiederum um 45° um die Achse 19 winkelversetzt. Es sind somit in regelmäßiger Anordnung abwechselnd ein Steg 18 der ersten Art und ein Steg 16 der zweiten Art vorgesehen. Jedem Steg der ersten Art mit einem Meßelement 26 liegt ein gleichartiger Steg 18 mit Meßelement 26 diametral gegenüber. Es sind zwei Paare solcher Stege 18 mit Meßelementen 26 senkrecht zueinander angeordnet.

Im Zentrum des inneren Körpers 12 des Drehmomentsensors 10 ist eine Bohrung 20 und eine daran anschließende Ausnehmung 21 vorgesehen. Diese Bohrung 20 und Ausnehmung 21 dient dazu, ein achsförmiges Kraftübertragungsglied eines (nicht dargestellten) zu kalibrierenden Schraubwerkzeugs aufzunehmen. Das Kraftübertragungsglied wird mit geeigneten Mitteln in der Bohrung 20 und der Ausnehmung 21 befestigt.

In dem inneren Körper 12 sind zur Reduzierung des Trägheitsmomentes in regelmäßiger Anordnung Bohrungen 22 angebracht. Zur weiteren Reduzierung des Trägheitsmomentes ist der innere Körper 12 aus einem Material von geringem spezifischen Gewicht hergestellt. Das spezifische Gewicht dieses Materials ist geringer als das spezifische Gewicht des äußeren Ringkörpers 14. Auch die radialen Abmessungen des inneren Körpers werden zur Reduzierung des Trägheitsmomentes möglichst klein gehalten.

Die Meßelemente 26 sind über feste Kabelverbindungen 30 mit einer Signalverarbeitungs-Schaltung 32 verbunden und so zusammengeschaltet, daß unter Kompensation von Störkräften ein Meßwert für ein um die Achse 19 auf den inneren Körper 12 wirkendes Drehmoment erhalten wird.

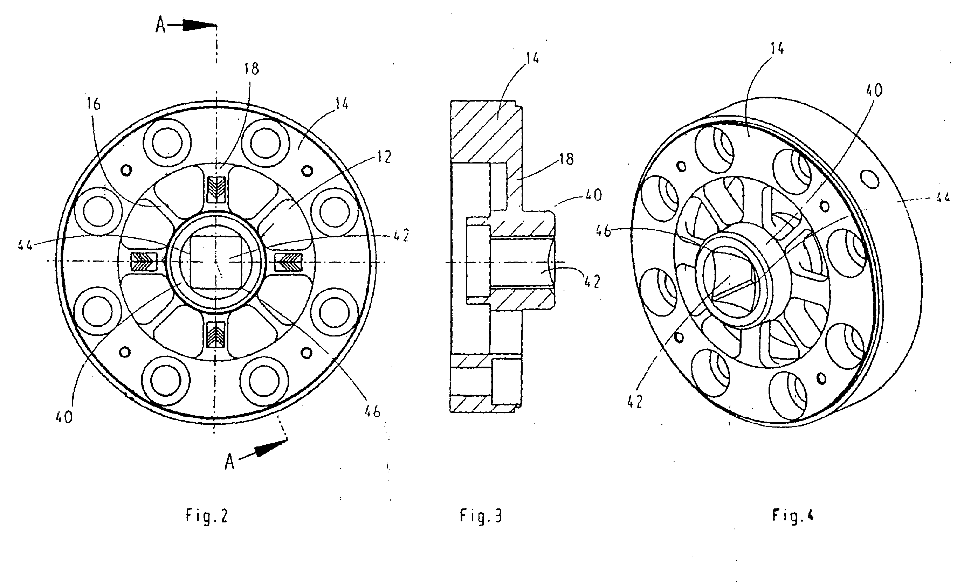

Fig.2 bis 4 zeigt einen ähnlichen Drehmomentsensor mit einem inneren Körper 12 und einem stationär gehaltenen äußeren Ringkörper 14, die durch Stege 18 erster Art und Stege 16 zweiter Art miteinander verbunden sind. Die Stege erster Art sind ebenso wie die Stege zweiter Art jeweils um 90° gegeneinander winkelversetzt. Die Stege 18 und 16 bilden zwei Kreuze , die gegeneinander wiederum um 45° winkelversetzt sind Entsprechende Teile tragen in Fig.2 bis 4 die gleichen Bezugszeichen wie in Fig.1.

Bei der Ausführung nach Fig.2 bis 4 ist der innere Körper 12 eine Nabe 40 mit einem Vierkantdurchbruch 42. Der Vierkantdurchbruch 42 ist mit seinen Seitenflächen 44 nach den Stegen 18 der ersten Art ausgerichtet und mit seinen Kanten 46 nach den Stegen 16 der zweiten Art. Der Vierkantdurchbruch 42 kann einen Vierkant eines Schraubwerkzeugs, z.B. eines Drehmomentschlüssels oder eines Schlag- oder Impulsschraubers aufnehmen.

Auch bei der Ausführung nach Fig.2 bis 4 ist das Trägheitsmoment des inneren Körpers gering gehalten.

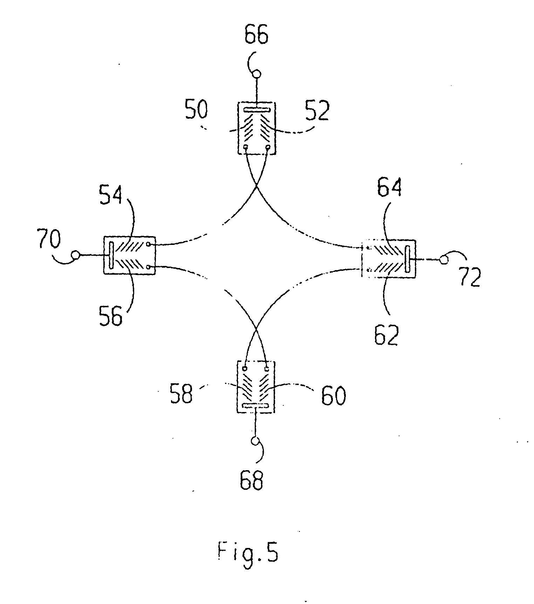

Fig.5 zeigt die Schaltung der Meßelemente, die in Fig. 1 und 2 generell mit 26 bezeichnet sind. Jedes Meßelement 26 besteht aus einem Paar von parallel zueinander und im wesentlichen radial angeordneten Dehnungsmeßstreifen 50, 52; 54,56; 58,60 und 62,64. Die Dehnungsmeßstreifen jedes Paares sind jeweils an einem ersten Ende, außen in Fig.5, miteinander verbunden. Ein zweites, inneres, Ende jedes Drehnungsmeßstreifens ist mit dem zweiten Ende eines Dehnungsmeßstreifens eines benachbarten Paares verbunden, und zwar ist das zweite Ende des Dehnungsmeßstreifens 52 mit den zweiten Ende des Dehnungsmeßstreifens 54 des einen, in Fig.5 linken und waagerechten, zu den Dehnungsmeßstreifen 50,52 senkrechten Paares 54,56 verbunden; und das zweite Ende des Dehnungsmeßstreifens 50 ist mit dem Dehnungsmeßstreifen 64 des anderen, in Fig.5 rechten und waagerechten, zu den Dehnungsmeßstreifen 50,52 senkrechten Paares 62,64 verbunden. Das zweite Ende des Dehnungsmeßstreifens 56 des Paares 54,56 ist mit dem zweiten Ende des Dehnungsmeßstreifens 60 des mit dem Paar 50,52 im wesentliche fluchtenden Paares 58,60 verbunden. Das zweite Ende des Dehnungsmeßstreifens 58 des Paares 58,60 ist mit dem zweiten Ende des Dehnungsmeßstreifens 62 des Paares 62,64 verbunden. Die Dehnungsmeßstreifen 50,52 und 58,60 sind auf den in Fig.2 senkrechten, einander diametral gegenüberliegenden Stegen 18 angebracht. Die Dehnungsmeßstreifen 54,56 und 62,64 sind auf den in Fig.2 waagerechten, einander diametral gegenüberliegenden Stegen 18 angebracht. Die Dehnungsmeßstreifen bilden eine Brückenschaltung. Dabei wird die Brückenspannung zwischen einer Klemme 66, die zwischen den ersten Enden der Drehnungsmeßstreifen 50,52 angeschlossen ist, und einer Klemme 68 angelegt, die zwischen den ersten Enden der Dehnungsmeßstreifen 58,60 angeschlossen ist. Ein Meßsignal wird zwischen einer Klemme 70, die zwischen den Dehnungsmeßstreifen 54,56 angeschlossen ist, und einer Klemme 72 abgegriffen, die zwischen den Dehnungsmeßstreifen 62 und 64 angeschlossen ist.

## Patentansprüche

1. Drehmomentsensor (10) enthaltend einen inneren Körper (12) mit einer Achse (19), in bezug auf welche ein Drehmoment zu messen ist, und einen äußeren Ringkörper (14), der den inneren Körper (12) konzentrisch umgibt und über radiale Stege (16,18) mit dem inneren Körper (12) verbunden ist, wobei eine erste Art von Stegen (18) mit in Umfangsrichtung relativ großer Breite aber relativ geringen axialen Abmessungen und eine zweite Art von in Umfangsrichtung relativ schmalen Stegen (16) aber relativ großen axialen Abmessungen vorgesehen sind, und Meßelemente (26) zur Torsionsmessung auf den Stegen (18) der ersten Art angeordnet sind,
**dadurch gekennzeichnet, daß** zum Kalibrieren von Schraubwerkzeugen,
(a) der Ringkörper (14) stationär gehalten ist und
(b) der innere Körper (12) eine zentrale, zu der Achse (19) koaxiale Aufnahme (20,21;40,42) zum Eingriff eines zu prüfendes Schraubwerkzeuges aufweist.

2. Drehmomentsensor nach Anspruch 1, **dadurch gekennzeichnet, daß**
(a) der Ringkörper (14) durch ein erstes Kreuz von vier um jeweils 90° gegeneinander um die Achse winkelversetzten Stege (18) der ersten Art mit dem inneren Körper (12) verbunden ist,
(b) der Ringkörper (14) weiterhin durch ein zweites Kreuz von vier um jeweils 90° um die Achse gegeneinander winkelversetzten Stegen (16) der zweiten Art mit dem inneren Körper (12) verbunden ist,
(c) das zweite Kreuz um 45° um die Achse (19) gegen das erste Kreuz winkelversetzt ist,
(d) Meßelemente (26) auf allen vier Stegen (18) der ersten Art angeordnet und so zusammengeschaltet sind, daß unter Kompensation von Störkräften ein Meßwert für ein um die Achse (19) auf den inneren Körper (12) wirke ndes Drehmoment erhalten wird.

3. Drehmomentsensor nach Anspruch 1 oder 2, bei welchem das Trägheitsmoment des inneren Körpers (12) so klein ist, daß beim Kalibrieren von dynamisch arbeitenden Schraubwerkzeugen, wie Impulsschraubern, die von dem inneren Körper (12) hervorgerufenen Trägheitskräfte gegenüber den auf die Stege (18) wirkenden Kräften vernachlässigbar sind.

4. Drehmomentsensor nach Anspruch 3, **dadurch gekennzeichnet, daß** die radialen Abmessungen des innere Körpers (12) klein gegen die radialen Abmessungen des Ringkörpers (14) sind.

5. Drehmomentsensor nach Anspruch 3 oder 4, **dadurch gekennzeichnet, daß** der innere Körper (12) aus einem Material besteht, das ein gegenüber dem Material des Ringkörpers (14) geringes spezifisches Gewicht besitzt.

6. Drehmomentsensor nach einem der Ansprüche 3 bis 5, **dadurch gekennzeichnet, daß** in dem inneren Körper (12) regelmäßig angeordnete Durchbrüche (22) zur Verminderung des Trägheitsmoments vorgesehen sind.

7. Drehmomentsensor nach einem der Ansprüche 1 bis 6, **dadurch gekennzeichnet, daß** der innere Körper (12) als zentrale Aufnahme zum Eingriff eines zu prüfenden Schraubwerkzeugs eine Nabe (40) mit einem Vierkantdurchbruch (42) aufweist.

8. Drehmomentsensor nach Anspruch 7, **dadurch gekennzeichnet, daß** der Vierkantdurchbruch (42) mit den Seitenflächen (44) des Vierkants zu den Stegen (18) der ersten Art und mit den Kanten (46) zu den Stegen (16) der zweiten Art ausgerichtet ist.

## Claims

1. A torque sensor (10) comprising an inner body (12) having an axis (19), in respect of which a torque is to be measured, and an outer annular body (14) concentrically surrounding the inner body (12) and connected to inner body (12) by radial bars (16, 18), wherein a first type of bars (18) with relatively large width in circumferential direction but relatively small axial dimensions and a second type of circumferentially relatively narrow bars (16) having relatively large axial dimensions are provided, and measuring elements (26) are arranged on the bars (18) of the first type for torsion measurement,
**characterised in that** for calibrating of screwing tools
(a) the annular body (14) is hold stationary, and
(b) the inner body (12) comprises a central receptacle (20, 21, 40, 42) coaxial to the axis (19) for engagement of a screwing tool to be tested.

2. A torque sensor according to claim 1, **characterised in that**
(a) the annular body (14) is connected to the inner body (12) by a first cross of four bars (18) of the first type with 90° angular offset to each other about the axis,
(b) furthermore, the annular body (14) is connected to the inner body (12) by a second cross of four bars (16) of the second type with 90° angularly offset to each other about the axis,
(c) the second cross has an angular offset of 45° to the first cross about the axis, and
(d) measuring elements (26) are arranged on all four bars (18) of the first type and are interconnect so that a measured value of torque acting about the axis (19) on the inner body (12) is obtained under compensation of disturbing forces.

3. A torque sensor according to claim 1 or 2, wherein the moment of inertia of the inner body (12) is so small that inertia forces induced by the inner body (12) are negligible compared with the forces acting on the bars (18) when calibrating dynamically operating screwing tools such as impulse screwdrivers.

4. A torque sensor according to claim 3, **characterised in that** the radial dimensions of the inner body (12) are small compared to the radial dimensions of the annular body (14).

5. A torque sensor according to claim 3 or 4, **characterised in that** the inner body (12) is of a material which has a low specific weight compared to the material of the annular body (14).

6. A torque sensor according to one of claims 3 to 5, **characterised in that** in the inner body (12) regularly arranged openings (22) are provided for reducing the moment of inertia.

7. A torque sensor according to one of claims 1 to 6, **characterised in that** the inner body (12) comprises a hub (40) with a square opening (42) as a central receptacle for engaging a screwing tool to be tested.

8. A torque sensor according to claim 7, **characterised in that** the square opening (42) is aligned with the side surfaces (44) of the square to the bars (18) of the first type and with the edges (46) to the bars (16) of the second type.

## Revendications

1. Capteur dynamométrique (10) comprenant un corps intérieur (12) muni d'un axe (19) par rapport auquel un couple de rotation est mesuré, et un corps annulaire extérieur (14) entourant le corps intérieur (12) de manière concentrique et relié au corps intérieur (12) par des traverses radiales (16, 18), prévoyant un premier type de traverses (18) présentant une largeur relativement élevée dans le sens de la circonférence, mais des dimensions axiales relativement faibles, et un second type de traverses (16) relativement étroites dans le sens de la circonférence, mais de dimensions axiales relativement élevées, et des éléments de mesure (26) de la torsion étant disposés sur les traverses (18) du premier type,
**caractérisé en ce que**, pour le calibrage d'outils de vissage,
(a) le corps annulaire (14) est maintenu fixement et
(b) le corps intérieur (12) présente un logement (20, 21 ; 40, 42) central, coaxial à l'axe (19) pour le contact avec un outil de vissage à contrôler.

2. Capteur dynamométrique selon la revendication 1, **caractérisé en ce que**
(a) le corps annulaire (14) est relié au corps intérieur (12) par une première croix de quatre traverses (18) de premier type, décalées chacune de 90° les unes par rapport aux autres autour de l'axe,
(b) le corps annulaire (14) est relié en outre au corps intérieur (12) par une seconde croix de quatre traverses (16) de second type, décalées chacune de 90° les unes par rapport aux autres autour de l'axe,
(c) la seconde croix est décalée de 45° autour de l'axe (19) par rapport à la première croix,
(d) des éléments de mesure (26) sont disposés sur toutes les quatre traverses (18) de premier type et sont raccordés ensemble de sorte à obtenir une valeur de mesure d'un couple de rotation agissant autour de l'axe (19) sur le corps intérieur (12) pour compenser les forces parasites.

3. Capteur dynamométrique selon la revendication 1 ou 2, pour lequel le moment d'inertie du corps intérieur (12) est tellement petit que, lors du calibrage d'outils de vissage à fonctionnement dynamique, comme les tournevis à impulsions, les forces d'inertie provoquées par le corps intérieur (12) sont négligeables par rapport aux forces agissant sur les traverses (18).

4. Capteur dynamométrique selon la revendication 3, **caractérisé en ce que** les dimensions radiales du corps intérieur (12) sont petites par rapport aux dimensions radiales du corps annulaires (14).

5. Capteur dynamométrique selon la revendication 3 ou 4, **caractérisé en ce que** le corps intérieur (12) se compose d'un matériau présentant un poids spécifique faible par rapport au matériau du corps annulaire (14).

6. Capteur dynamométrique selon l'une quelconque des revendications 3 à 5, **caractérisé en ce que** des percements (22) disposés régulièrement dans le corps intérieur (12) sont prévus pour réduire le moment d'inertie.

7. Capteur dynamométrique selon l'une quelconque des revendications 1 à 6, **caractérisé en ce que** le corps intérieur (12) présente sous forme de logement central destiné au contact avec un outil de vissage à contrôler un moyeu (40) muni d'un percement carré (42).

8. Capteur dynamométrique selon la revendication 7, **caractérisé en ce que** le percement carré (42) est orienté avec les faces latérales (44) du carré vers les traverses (18) du premier type, et avec les arrêtes (46) vers les traverses (16) de second type.
